Europäisches Patentamt

**European Patent Office**

**Office européen des brevets**

(11) Veröffentlichungsnummer: **0 137 247**
**B1**

(12) **EUROPÄISCHE PATENTSCHRIFT**

(45) Veröffentlichungstag der Patentschrift:
**17.01.90**

(21) Anmeldenummer: **84109968.2**

(22) Anmeldetag: **22.08.84**

(51) Int. Cl. ⁴: **F 16 D 27/16, B 60 K 41/02**

(54) Einrichtung zum Schutz einer Kupplung gegen Überhitzung.

(30) Priorität: **26.09.83 DE 3334725**

(43) Veröffentlichungstag der Anmeldung:
**17.04.85 Patentblatt 85/16**

(45) Bekanntmachung des Hinweises auf die Patenterteilung:
**17.01.90 Patentblatt 90/03**

㉝ Bennante Vertragsstaaten:
**DE FR GB IT SE**

(56) Entgegenhaltungen:
**WO-A-82/01519**
**DE-A-3 136 725**
**DE-A-3 206 593**
**FR-A-2 500 095**
**GB-A-2 093 618**
**US-A-4 081 065**

(73) Patentinhaber: **WABCO Westinghouse Fahrzeugbremsen GmbH**
**Am Lindener Hafen 21 Postfach 91 12 80**
**D-3000 Hannover 91 (DE)**

(74) Vertreter: **Schrödter, Manfred**
**WABCO Westinghouse Fahrzeugbremsen GmbH Am Lindener Hafen 21 Postfach 91 12 80**
**D-3000 Hannover 91 (DE)**

LIBERGRAF, STOCKHOLM 1990

**Beschreibung**

Die Erfindung betrifft eine Einrichtung zum Schutz einer Kupplung gegen Überhitzung gemäß dem Oberbegriff des Anspruchs 1.

Es werden Reibkupplungen verwendet, um zwei sich bewegende Teile kraftschlüssig zu verbinden oder zu trennen. Während des Kupplungsvorganges können die einzelnen Kupplungsteile längere Zeit aufeinander reiben. Dies tritt insbesondere bei Kraftfahrzeugkupplungen während der Anfahr- und Umschaltvorgänge auf, wenn die Drehzahlen von Motor- und Getriebewelle einander angeglichen werden müssen. In der Regel sind Kraftfahrzeugkupplungen so ausgelegt, daß sie diese Vorgänge ohne Schaden überstehen. Es treten insbesondere im Kraftfahrzeug aber Fahrsituationen auf, in denen längere Zeit mit Kupplungsschlupf gefahren wird. Dieses kann bei einer manuell betätigten Kupplung an einer Steigung auftreten, wenn der Fahrer mit schleifender Kupplung und Teilgas das Fahrzeug an der Steigung hält, oder wenn das Fahrzeug bei einer automatisch betätigten Kupplung an einer Steigung längere Zeit am Gaspedal hängt. Bei einer manuell betätigten Kupplung ist dem Fahrer in der Regel die Gefährlichkeit des Schleifenlassens der Kupplung bekannt, und er wird dann nach kurzer Zeit dazu übergehen, das Fahrzeug mit der Bremse an der Steigung zu halten. Bei Kupplungsautomaten jedoch wird ihm die Gefährlichkeit eines solchen Zustandes nicht bewußt sein, da er nur ein wenig Gas zu geben braucht, um das Fahrzeug an der Steigung zu halten.

Um Überhitzungszustände zu vermeiden, ist in der DE-A-3 206 593 vorgeschlagen worden, die Schlupfdrehzahl zwischen Eingangs- und Ausgangswelle zu ermitteln und hieraus ein Signal zu ermitteln, das nach einer vorbestimmten Zeit an den Fahrer abgegeben wird. Diese Einrichtung arbeitet sehr ungenau, weil in die Erwärmung der Kupplung auch ganz entscheidend das übertragene Reibmoment eingeht, welches bei der Einrichtung nach der DE-A-3 206 593 nicht berücksichtigt wird, so daß ein Überhitzungsschutz nicht für alle Betriebszustände gewährleistet ist.

Die Aufgabe der vorliegenden Erfindung besteht deshalb darin, eine Einrichtung der eingangs genannten Art so auszubilden, daß für alle Betriebszustände ein Überhitzungsschutz einer Kupplung gewährleistet ist.

Die Erfindung geht von der Erkenntnis aus, daß zur Lösung der Aufgabe die in der Kupplung verbrauchte Energie zu ermitteln ist. Diese Energie kann aus dem Produkt aus Antriebsmoment M und Schlupfdrehzahl ermittelt werden. Die Schlupfdrehzahl kann aus der Differenz der Kupplungseingangsdrehzahl und der Kupplungsausgangsdrehzahl ermittelt werden. Die verbrauchte Energie läßt sich somit nach der Gleichung

$$E = M \cdot (\omega_{Mot} - \omega_G) \cdot t$$

berechnen. In der Gleichung bedeuten

E     die Energie, die die Kupplung als Reibleistung aufnehmen kann ohne unzulässig zerstört zu werden,

M     das Antriebsmoment bzw. Drehmoment,

$\omega_{Mot}$   die Winkelgeschwindigkeit des Motors,

$\omega_G$   die abtriebsseitige Winkelgeschwindigkeit der Kupplung bzw. die um das Übersetzungsverhältnis korrigierte Winkelgeschwindigkeit des Getriebes und

t     die Schlupfzeit.

Die der Erfindung zugrundeliegende Aufgabe wird durch die im Kennzeichen des Anspruchs 1 angegebene Ausbildung gelöst.

Vorteilhafte und zweckmäßige Weiterbildungen der Aufgabenlösung sind in den Unteransprüchen gekennzeichnet.

Die Erfindung ist vor allem bei manuell oder automatisch gekuppelten Hauptkupplungen für Straßenfahrzeuge geeignet. Sie kann aber auch bei allen Arten von Kupplungen vorteilhaft eingesetzt werden.

Für die Ermittlung der Kupplungsreibleistung kann vorteilhaft das für eine eventuell vorhandene Getriebeautomatik erforderliche stationäre Antriebsmoment herangezogen werden, das sich aus dem Gewicht des Fahrzeuges und der Fahrzeugbeschleunigung bei einem bestimmten Motordrehmoment errechnen läßt. Die Ermittlung des stationären Antriebsmomentes ist in der DE-A-3 311 226 beschrieben.

Bei kurz hintereinander auftretenden Kupplungsschlupfvorgängen ist es vorteilhaft, dies durch eine entsprechende Einrichtung zu erkennen, um so eine Überhitzung der Kupplung zu vermeiden. Hierzu wird gemäß einer Weiterbildung der erfindungsgemäßen Aufgabenlösung vorgeschlagen, einen Speicher zu verwenden, der die Zeiten aufeinanderfolgender Kupplungsschlupfvorgänge speichert und in dem während der Zeiten, in denen keine Kupplungsschlupfvorgänge stattfinden, die Schlupfzeiten nach einer vorgegebenen Funktion, die dem Abkühlungsverlauf der Kupplung entspricht, erniedrigt.

Um eine Überhitzung sicher zu vermeiden und den Fahrer nicht nur akustisch oder optisch zu warnen, sondern zu zwingen, den Schlupfvorgang zu beenden, wird in Weiterbildung der erfindungsgemäßen Aufgabenlösung vorgeschlagen, ein stetiges langsames Einrücken der Kupplung und gleichzeitig eine entsprechende Steuerung des Gaspedals vorzusehen, wenn eine vorgegebene Reibleistung überschritten wird. Der Fahrer wird dann feststellen, daß das Fahrzeug beginnt, sich langsam zu bewegen, wodurch er gezwungen wird, auf die Bremse zu treten und den Schlupfvorgang zu beenden.

Durch die vorliegende Erfindung werden sicher und auf einfache Art und Weise Kupplungsschäden durch Überhitzung vermeiden, da normalerweise sehr aufwendige direkte Messungen von Temperaturen an der Kupplung nicht mehr durchgeführt zu werden brauchen. Der Überhitzungsschutz ist erfindungsgemäß erreichbar mit einfachen Drehzahlgebern und mit Hilfe der bei einer Getriebeschaltung ohnehin vorhandenen Antriebsmoment-Feststelleinrichtung. Die notwendigen Operationen und Rechnungen können mit einer heutzutage üblichen Mikrocomputereinrichtung durchgeführt werden.

Unter den in den Patentansprüchen verwendeten "Momenten" sind auch Antriebsgrößen allgemeiner Art zu verstehen, also z. B. auch Leistungsgrößen oder vergleichbare Größen, die die Antriebsmomente lediglich als eine von mehreren Rechengrößen enthalten.

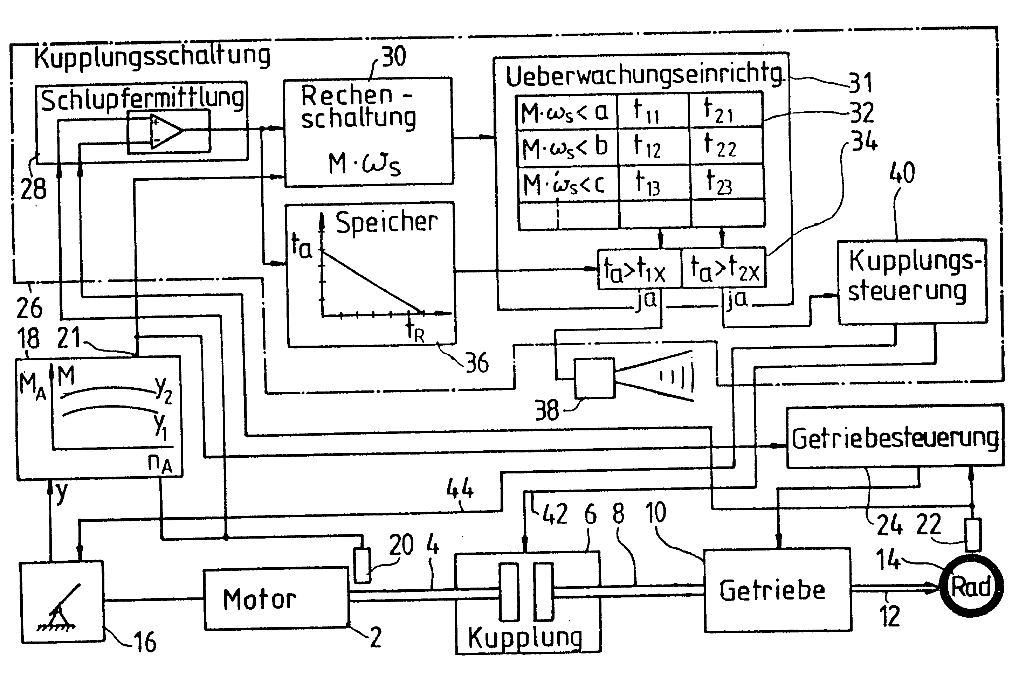

Die Erfindung soll nachfolgend anhand der beigefügten Zeichnung näher erläutert werden.

Die Zeichnung zeigt in schematischer Darstellung einen Motor 2, der vermittels einer Welle 4 mit einer Kupplung 6 verbunden ist, die wiederum vermittels einer Welle 8 mit einem Getriebe 10 verbunden ist, das über eine Welle 12 Räder 14 eines Fahrzeugs antreibt, von denen nur ein Rad schematisch dargestellt ist. Der Motor wird gesteuert über einen vom Fahrer zu betätigenden Geber 16, dessen Stellweg außerdem als Informationssignal y einer Einrichtung 18 zur Ermittlung des Antriebsmomentes Ma zugeführt wird, in der die Motorkennlinien abgespeichert sind und der als weiteres Informationssignal die Drehzahl des Motors 2 zugeführt wird, die vermittels eines ersten Drehgebers 20 ermittelt wird. Die Einrichtung 18 ermittelt aus diesen Signalen das zugehörige Motorantriebsmoment, das als entsprechendes Informationssignal an einem Signalausgang 21 zur Verfügung steht.

Es ist ein zweiter Drehgeber zur Ermittlung der Drehzahl eines angetriebenen Fahrzeugrades 14 vorgesehen, dessen Drehzahl-Signal einer Getriebesteuereinrichtung 24 zugeführt wird, die in Abhängigkeit von der Fahrzeugraddrehzahl und dem ebenfalls zugeführten Motorantriebsmoment-Signal das Getriebe 10 steuert.

Die Ausgangssignale der Einrichtung 18 und der Drehgeber 20 und 22 werden außerdem einer Kupplung-Überhitzungsschutzschaltung 26 zugeführt. Die Überhitzungsschutzschaltung 26 weist eine Schlupfermittlungseinrichtung 28 auf, in der durch Differenzbildung zwischen Kupplungseingangsdrehzahl und Kupplungsausgangsdrehzahl der Kupplungsschlupf ermittelt wird. Die Kupplungseingangsdrehzahl entspricht der Motordrehzahl, die mit dem Drehgeber 20 ermittelt wird, und die Kupplungsausgangsdrehzahl ist gleich der abtriebsseitigen, vor dem Getriebe gemessenen Drehzahl der Kupplung oder gleich der mit dem Drehgeber 22 hinter dem Getriebe gemessenen, durch das Übersetzungsverhältnis korrigierten Drehzahl.

Die Überhitzungsschutzschaltung 26 weist ferner eine Recheneinrichtung 30 auf, deren Signaleingänge mit dem Signalausgang der Schlupfermittlungseinrichtung 28 und der Einrichtung 18 verbunden sind und die aus dem zugeführten Kupplungsschlupfwert $W_S$ (Differenz der Kupplungseingangsdrehzahl und Kupplungsausgangsdrehzahl bzw. der Differenz zwischen Kupplungseingangswinkelgeschwindigkeit und Kupplungsausgangswinkelgeschwindigkeit) und dem Motorantriebsmoment M die in der Zeiteinheit verbrauchte Energie in Form der Reibleistung nach der Gleichung $M \cdot W_S$ ermittelt.

Die verschiedenen Reibleistungswerte $M \cdot \omega_S$ werden einer Überwachungseinrichtung 31 zugeführt, die einen Speicher 32 aufweist, in dem eine Tabelle verschiedener Reibleistungswerte ($M \cdot \omega_S$) abgespeichert ist; dabei kann aus Sicherheitsgründen die höchste Reibleistung, die innerhalb eines einzelnen Schlupfvorganges auftritt, ausgewählt werden. Dem so ermittelten Reibleistungswert ($M \cdot \omega_S$) werden jeweils zwei Warnruhezeiten $t_{1x}$, $t_{2x}$ zugeordnet. Der jeweils ermittelte Reibleistungswert wird mit den Werten der Tabelle verglichen. Die zugeordneten beiden Warnruhezeiten $t_{1x}$ und $t_{2x}$ werden einer Vergleichseinrichtung 34 zugeführt und dort mit der jeweiligen aktuellen Kupplungsschlupfzeit $t_a$ verglichen, die aus einem Speicher 36 abrufbar ist. Übersteigt die aktuelle Kupplungsschlupfzeit $t_a$ die erste Warnruhezeit $t_{1x}$, wird eine Warneinrichtung 38 betätigt, die den Fahrer akustisch oder optisch warnt. Übersteigt die aktuelle Kupplungsschlupfzeit $t_a$ auch die zweite Warnruhezeit $t_{2x}$, wird eine Kupplungssteuereinrichtung 40 angesteuert, deren Ausgangssignal dann die Kupplung 6 über eine Leitung 42 langsam einrücken läßt und gleichzeitig eine entsprechende Steuerung des Gebers 16 über eine Leitung 44 bewirkt und somit den Kupplungsschlupf abbaut.

Die aktuellen Kupplungsschlupfzeiten $t_a$ werden aus der Anstehzeit der Ausgangssignale der Schlupfermittlungseinrichtung 28 gewonnen, wobei die jeweils ermittelten Schlupfzeiten zu den noch gespeicherten Schlupfzeiten im Speicher 36 hinzuaddiert werden. Die im Speicher 36 abgespeicherten Schlupfzeiten werden ständig nach einer vorgegebenen Funktion entsprechend dem jeweiligen Verlauf der Kupplungsabkühlzeit stetig oder schrittweise bis maximal auf Null erniedrigt. Hierdurch ist sichergestellt, daß bei aufeinanderfolgenden Kupplungsschlupfvorgängen die noch vorhandene Restwärme aus den jeweils vorangegangenen Kupplungsschlupfvorgängen berücksichtigt wird, so daß für jeden Betriebszustand ein Überhitzungsschutz gewährleistet ist.

## Patentansprüche

1. Einrichtung zum Schutz einer Kupplung gegen Überhitzung, die zwischen einem Verbrennungsmotor und einem Getriebe angeordnet ist, *gekennzeichnet durch:*

   a) eine Antriebsmoment-Ermittlungseinrichtung (18) zur Ermittlung des von der Kupplung zu übertragenden Kupplungsmomentes bzw. Antriebsmomentes;

   b) eine den Schlupf zwischen Kupplungseingangsdrehzahl und Kupplungsausgangsdrehzahl ermittelnde Schlupfermittlungseinrichtung (28);

c) eine das Produkt aus dem ermittelten, zu übertragenden Kupplungs- bzw. Antriebsmoment und dem Schlupf bildende Recheneinrichtung (30);

d) eine Überwachungseinrichtung (31), die den Werten des Produktes aus zu übertragendem Kupplungsmoment und Schlupf Warnruhezeiten zumißt und die jeweils aktuelle Schlupfzeit mit den Warnruhezeiten vergleicht und bei Überschreitung der Warnruhezeiten durch die Schlupfzeiten ein Warnsignal erzeugt.

2. Einrichtung nach Anspruch 1, *dadurch gekennzeichnet*, daß das zu übertragende Kupplungs- oder Antriebsmoment aus dem am Motor (2) gemessenen Motorantriebsmoment oder aus einem am oder hinter dem Getriebe (10) gemessenen und mittels eventuell vorhandener Übersetzungsverhältnisse umgerechneten Antriebsmoment ermittelt wird.

3. Einrichtung nach Anspruch 1, *dadurch gekennzeichnet*, daß das zu übertragende Kupplungs- oder Antriebsmoment das aus den Motorsteuersignalen eines Gebers bzw. einer Motorsteuereinrichtung (16) und den Motordrehzahlen ermittelte Motorantriebsmoment ist.

4. Einrichtung nach Anspruch 1, *dadurch gekennzeichnet*, daß das Kupplungsmoment das stationäre Antriebsmoment für stationäre Fahrt auf der jeweiligen Fahrbahn ist.

5. Einrichtung nach Anspruch 4, *dadurch gekennzeichnet*, daß das jeweils zuletzt ermittelte stationäre Antriebsmoment verwendet wird, beispielsweise das der jeweiligen Steigung und dem Fahrzeuggewicht (z. B. vor einer Bremsung) zugeordnete stationäre Antriebsmoment.

6. Einrichtung nach einem der Ansprüche 1 bis 5, *dadurch gekennzeichnet*, daß ein die Drehzahl eingangsseitig der Kupplung (6) erfassender erster Drehgeber (20) und ein die Drehzahl ausgangsseitig der Kupplung erfassender zweiter Drehgeber (22) vorgesehen sind, deren Drehzahl-Signale einer Differenzbildungsstufe der Schlupfermittlungseinrichtung (28) zugeführt werden.

7. Einrichtung nach Anspruch 6, *dadurch gekennzeichnet*, daß die mit dem zweiten Sensor (22) abtriebsseitig vom Getriebe ermittelte Drehzahl mit dem jeweiligen Übersetzungsverhältnis des Getriebes korrigiert wird.

8. Einrichtung nach einem der Ansprüche 1 bis 7, *dadurch gekennzeichnet*, daß die Warnruhezeit aus der Gleichung

$$t = \frac{E_1}{M \cdot (\omega_{Mot} - \omega_G)}$$

ermittelt bzw. berechnet wird, in der

$E_1$ eine obere vorgegebene Grenzenergie.
$M$ das Motorantriebsmoment bzw. Drehmoment,
$\omega_{Mot}$ die Motorwinkelgeschwindigkeit und
$\omega_G$ die abtriebsseitige Winkelgeschwindigkeit der Kupplung (6) bzw. die mit dem Übersetzungsverhältnis des Getriebes korrigierte abtriebsseitige Winkelgeschwindigkeit des Getriebes (10) bedeuten.

9. Einrichtung nach einem der Ansprüche 1 bis 7, *dadurch gekennzeichnet*, daß die Warnruhezeit dadurch ermittelt wird, daß verschieden großen Werten des Produktes $M \cdot (\omega_{Mot} - \omega_G)$ in einer Tabelle eines Speichers (32) der Überwachungseinrichtung (31) verschieden große Zeiten t zugemessen werden.

10. Einrichtung nach Anspruch 9, *dadurch gekennzeichnet*, daß den sich aus dem Produkt $M \cdot (\omega_{Mot} - \omega_G)$ ergebenden Werten mit zunehmender Größe kleiner werdende Warnruhezeiten t zugeordnet werden.

11. Einrichtung nach Anspruch 9, *dadurch gekennzeichnet*, daß den sich aus dem Produkt $M \cdot (\omega_{Mot} - \omega_G)$ ergebenden Werten mit zunehmender Größe progressiv kleiner werdende Warnruhezeiten t zugeordnet werden.

12. Einrichtung nach einem der Ansprüche 1 bis 11, *dadurch gekennzeichnet*, daß den sich aus dem Produkt $M \cdot (\omega_{Mot} - \omega_G)$ ergebenden Werten jeweils zwei verschiedene aufeinanderfolgende Warnruhezeiten $t_1$, $t_2$ zugeordnet werden.

13. Einrichtung nach Anspruch 12, *dadurch gekennzeichnet*, daß nach Ablauf der ersten Warnruhezeit $t_1$ eine Warneinrichtung (38) betätigt wird, die einen für den Fahrer hörbaren Warnton erzeugt.

14. Einrichtung nach Anspruch 12, *dadurch gekennzeichnet*, daß nach Ablauf der zweiten Warnruhezeit $t_2$ eine Einrichtung (40) zum langsamen, stetigen Einrücken der Kupplung (6) und zur entsprechenden Steuerung des Gebers (16) betätigt wird.

15. Einrichtung nach einem der Ansprüche 1 bis 14, *dadurch gekennzeichnet*, daß die jeweils ermittelten Schlupfzeiten in einen Speicher (36) eingeschrieben werden, der diese Schlupfzeiten den Schlupfzeiten, die bei vorangegangenen, überwachten Kupplungsschlupfvorgängen ermittelt wurden, hinzuaddiert.

16. Einrichtung nach Anspruch 15, *dadurch gekennzeichnet*, daß die im Speicher (36) abgespeicherte Schlupfzeit nach einer vorgegebenen Funktion entsprechend dem jeweiligen Verlauf der Kupplungsabkühlzeit kontinuierlich oder schrittweise erniedrigt wird.

17. Einrichtung nach einem der Ansprüche 1 bis 16, *dadurch gekennzeichnet*, daß die im Speicher (36) stehende aktuelle Schlupfzeit $t_a$ mit den der jeweiligen ermittelten Reibleistung $M \cdot (\omega_{Mot} - \omega_G)$ in der Überwachungseinrichtung (31) zugeordneten Warnruhezeiten $t_{1x}$ und $t_{2x}$ in einer Vergleichseinrichtung (34) verglichen wird.

18. Einrichtung nach Anspruch 17, *dadurch gekennzeichnet*, daß die Vergleichseinrichtung (34) eine akustische oder optische Warneinrichtung (38) betätigt, wenn die Schlupfzeit $t_a$ die erste Warnruhezeit $t_{1x}$ überschreitet, und eine Kupplungssteuereinrichtung (40) zum langsamen stetigen Einrücken der Kupplung (6) betätigt, wenn die Schlupfzeit $t_a$ die zweite Warnruhezeit $t_{2x}$ überschreitet.

19. Einrichtung nach Anspruch 17, *dadurch gekennzeichnet*, daß das Ausgangssignal der Kupplungssteuereinrichtung (40) den Geber (16) dem langsamen stetigen Einrücken der Kupplung (6) entsprechend so steuert, daß kein Drehzahlabfall auftritt.

20. Einrichtung nach einem der vorhergehenden Ansprüche, *dadurch gekennzeichnet*, daß zur Durchführung der Operationen und Berechnungen wenigstens ein Mikrocomputer verwendet wird.

## Claims

1. A device for protecting a clutch against overheating which is arranged between an internal combustion engine and gears, characterized by:

a) a driving torque-determining device (18) for determining the coupling torque or driving torque to be transmitted by the clutch;

b) a slip-determining device (28) that determines the slip between clutch input speed and clutch output speed;

c) a computing device (30) forming the product of the determined coupling or driving torque to be transmitted and the slip;

d) a monitoring device (31) which apportions the values of the product of the coupling torque to be transmitted and slip warning rest periods and compares the actual slip time in each case with the warning rest periods and produces a warning signal when the warning rest periods are exceeded by the slip times.

2. A device according to claim 1, characterized in that the coupling or driving torque to be transmitted is determined from the engine driving torque measured at the engine (2) or from a driving torque measured at or behind the gears (10) which has been converted by means of any transmission ratios that may be available.

3. A device according to claim 1, characterized in that the coupling or driving torque to be transmitted is the engine driving torque determined from the engine control signals of a transmitter or of an engine control device (16) and from the engine speeds.

4. A device according to claim 1, characterized in that the coupling torque is the steady driving torque for steady drive on the particular roadway.

5. A device according to claim 4, characterized in that the steady driving torque determined most recently in each case is used, for example the steady driving torque associated with the particular incline and with the weight of the vehicle (e.g. before braking).

6. A device according to any one of claims 1 to 5, characterized in that there are provided a first shaft encoder (20) recording the speed at the input side of the clutch (6) and a second shaft encoder (22) recording the speed at the output side of the clutch, the speed-signals of which shaft encoders are fed to a differential stage of the slip-determining device (28).

7. A device according to claim 6, characterized in that the speed determined with the second sensor (22) at the power-output side of the gears is adjusted by the transmission ratio of the gears in each case.

8. A device according to any one of claims 1 to 7, characterized in that the warning rest period is determined or calculated from the equation

$$t = \frac{E_1}{M \cdot (\omega_{Mot} - \omega_G)}$$

in which

$E_1$    is an upper, pre-determined limit energy,
$M$    is the engine driving torque or starting torque,
$\omega_{Mot}$    is the angular velocity of the engine and
$\omega_G$    is the angular velocity of the clutch (6) at the power-output side or the angular velocity of the gears (10) at the power-output side adjusted by the transmission ratio of the gears.

9. A device according to any one of claims 1 to 7, characterized in that the warning rest period is determined in such a manner that times t of differing durations are apportioned to varying values of the product of $M \cdot (\omega_{Mot} - \omega_G)$ in a table of a memory (32) of the monitoring device (31).

10. A device according to claim 9, characterized in that decreasing warning rest periods t are associated with the values of increasing size arising from the product of $M \cdot (\omega_{Mot} - \omega_G)$.

11. A device according to claim 9, characterized in that progressively decreasing warning rest periods t are associated with the values of increasing size arising from the product of M · ($\omega_{Mot}$ – $\omega_G$).

12. A device according to any one of claims 1 to 11, characterized in that in each case two different successive warning rest periods $t_1$, $t_2$ are associated with the values arising from the product of M · ($\omega_{Mot}$ – $\omega_G$).

13. A device according to claim 12, characterized in that upon expiry of the first warning rest period $t_1$, a warning device (38) is actuated which produces a warning signal audible to the driver.

14. A device according to claim 12, characterized in that upon expiry of the second warning rest period $t_2$, a device (40) for slow, steady engaging of the clutch (6) and for corresponding control of the transmitter (16) is actuated.

15. A device according to any one of claims 1 to 14, characterized in that the slip times determined in each case are recorded in a memory (36) which adds these slip times to the slip times determined in preceding monitored clutch slipping actions.

16. A device according to claim 15, characterized in that the slip time stored in the memory (36) is reduced continuously or stepwise according to a given function corresponding to the particular progress of the clutch cooling time.

17. A device according to any one of claims 1 to 16, characterized in that the actual slip time $t_a$ in the memory (36) is compared in a comparator (34) with the warning rest periods $t_{1x}$ and $t_{2x}$ allocated in the monitoring device (31) to the particular friction power M · ($\omega_{Mot}$ – $\omega_G$) determined.

18. A device according to claim 17, characterized in that the comparator (34) actuates an audible or visual warning device (38) when the slip time $t_a$ exceeds the first warning rest period $t_{1x}$, and actuates a clutch control device (40) for the slow, steady engaging of the clutch (6) when the slip time $t_a$ exceeds the second warning rest period $t_{2x}$.

19. A device according to claim 17, characterized in that the output signal of the clutch control device (40) controls the transmitter (16) in accordance with the slow, steady engaging of the clutch (6) in such a manner that no decrease in speed occurs.

20. A device according to any one of the preceding claims, characterized in that at least one microcomputer is used to carry out the operations and calculations.

## Revendications

1. Dispositif de protection contre les surchauffes d'un embrayage agencé entre un moteur à combustion et une transmission, *caractérisé* par

a) un dispositif (18) de détermination du couple d'entraînement, pour déterminer le couple d'embrayage ou encore le couple d'entraînement que l'embrayage doit transmettre;
b) un dispositif (28) de détermination du glissement déterminant le glissement entre vitesse de rotation à l'entrée de l'embrayage et vitesse de rotation à la sortie de l'embrayage;
c) un dispositif de calcul (30) formant le produit du glissement par le couple déterminé, qui est le couple d'entraînement ou d'embrayage à transmettre;
d) un dispositif de surveillance (31) qui affecte des temps morts d'avertissement aux valeurs du produit du glissement par le couple d' embrayage à transmettre et qui compare le temps de glissement actuel aux temps morts d'avertissement et qui, en cas de dépassement des temps morts d' avertissement par les temps de glissement, génère un signal d'avertissement.

2. Dispositif selon revendication 1, *caractérisé* par le fait que le couple d'entraînement ou d'embrayage à transmettre est déterminé à partir du couple d'entraînement mesuré au moteur (2) ou à partir d'un couple d'entraînement mesuré à la transmission (10) ou derrière celle-ci et converti en fonction de rapports de transmission éventuellement existants.

3. Dispositif selon revendication 1, *caractérisé* par le fait que le couple d'entraînement ou d'embrayage à transmettre est un couple d'entraînement par moteur, établi à partir des signaux de commande de moteur fournis par un capteurémetteur, ou encore par un dispositif (16) de commande de moteur, et à partir des vitesses de rotation de moteur.

4. Dispositif selon revendication 1, *caractérisé* par le fait que le couple d'embrayage est le couple d'entraînement en régime permanent pour une marche en régime permanent sur la chaussée du moment.

5. Dispositif selon revendication 4, *caractérisé* par le fait que l'on utilise le couple d'entraînement en régime permanent qui a été déterminé à chaque fois en dernier, par exemple le couple d'entraînement en régime permanent affecté à la côte du moment et au poids du véhicule (par exemple avant un freinage).

6. Dispositif selon l'une des revendications 1 à 5, *caractérisé* par le fait qu'un premier capteur de vitesse de rotation (20) mesurant la vitesse de rotation du côté entrée de l'embrayage (6) et un deuxième capteur de vitesse de rotation (22) mesurant la vitesse de rotation du côté sortie de l'embrayage sont prévus, leurs signaux de vitesse de rotation étant transmis à un étage de formation de différence que comporte le dispositif (28) de détermination du glissement.

7. Dispositif selon revendication 6, *caractérisé* par le fait que la vitesse de rotation déterminée par un deuxième capteur (22), du côté sortie de la transmission, est corrigée du rapport de transmission de la transmission.

8. Dispositif selon l'une des revendications 1 à 7, *caractérisé* par le fait que le temps mort d'avertissement est établi ou calculé à partir de l'égalité

$$ t = \frac{E_1}{M \cdot (\omega_{Mot} - \omega_G)} $$

dans laquelle

$E_1$ est une énergie-limite supérieure prédéterminée,

$M$ est le couple d'entraînement du moteur ou encore le couple de rotation,

$\omega_{Mot}$ est la vitesse angulaire du moteur et

$\omega_G$ est la vitesse angulaire côté sortie de l'embrayage (6) ou encore la vitesse angulaire à la sortie de la transmission (10), corrigée du rapport de transmission de la transmission.

9. Dispositif selon l'une des revendications 1 à 7, *caractérisé* par le fait que le temps mort de repos est déterminé par le fait que des temps t de valeurs différentes sont affectés, dans une table d'une mémoire (32) du dispositif de surveillance (31), aux différentes valeurs du produit $M \cdot (\omega_{Mot} - \omega_G)$.

10. Dispositif selon revendication 9, *caractérisé* par le fait qu'aux valeurs résultant du produit $M \cdot (\omega_{Mot} - \omega_G)$ ayant une valeur croissante sont affectés des temps morts d'avertissement t devenant plus petits.

11. Dispositif selon revendication 9, *caractérisé* par le fait qu'aux valeurs résultant du produit $M \cdot (\omega_{Mot} - \omega_G)$ ayant une valeur croissante sont affectés des temps morts d'avertissement t devenant progressivement plus petits.

12. Dispositif selon l'une des revendications 1 à 11, *caractérisé* par le fait qu'aux valeurs résultant du produit $M \cdot (\omega_{Mot} - \omega_G)$ sont affectés à chaque fois deux temps morts d'avertissement différents et successifs, $t_1$, $t_2$.

13. Dispositif selon revendication 12, *caractérisé* par le fait qu'après l'écoulement du premier temps mort d'avertissement ($t_1$) un dispositif d'avertissement (38) est actionné et produit un son d'avertissement audible par le conducteur.

14. Dispositif selon revendication 12, *caractérisé* par le fait qu'après l'écoulement du deuxième temps mort d'avertissement $t_2$ un dispositif (40) pour l'engagement lent et progressif de l'embrayage (6) et pour la commande correspondante du capteur-émetteur (16) est actionné.

15. Dispositif selon l'une des revendications 1 à 14, *caractérisé* par le fait que les temps de glissement déterminés dans chaque cas sont introduits dans une mémoire (36) qui ajoute ces temps de glissement aux temps de glissement qui ont été déterminés lors des précédents processus de glissement d'embrayage surveillés.

16. Dispositif selon revendication 15, *caractérisé* par le fait que le temps de glissement mémorisé dans la mémoire (36) est diminué de manière continue, ou par échelons, selon une fonction prédéterminée, en correspondance avec l'évolution du temps de refroidissement de l'embrayage dans le cas considéré.

17. Dispositif selon l'une des revendications 1 à 16, *caractérisé* par le fait que le temps de glissement actuel $t_a$ présent dans la mémoire (36) est comparé, dans un dispositif comparateur (34), aux temps morts d'avertissement $t_{1x}$ et $t_{2x}$ qui sont affecté, dans le dispositif de surveillance (31), à la puissance de frottement $M \cdot (\omega_{Mot} - \omega_G)$ établie à chaque fois.

18. Dispositif selon revendication 17, *caractérisé* par le fait que le dispositif comparateur (34) actionne un dispositif avertisseur acoustique ou optique (38), lorsque le temps de glissement $t_a$ excède le temps mort d'avertissement $t_{1x}$, et actionne un dispositif de commande d'embrayage (40) pour l'engagement lent progressif de l'embrayage (6), lorsque le temps de glissement $t_a$ excède le deuxième temps mort d'avertissement $t_{2x}$.

19. Dispositif selon revendication 17, *caractérisé* par le fait que le signal de sortie du dispositif de commande d'embrayage (40) commande le capteur-émetteur (16) en correspondance avec l'engagement lent progressif de l'embrayage (6), de manière qu'il n'y ait aucune chute de la vitesse de rotation.

20. Dispositif selon l'une des revendications précédentes, *caractérisé* par le fait qu'au moins un microcalculateur est utilisé pour exécuter les opérations et calculs.

EP 0 137 247 B1

Kupplungsschaltung

Schlupfermittlung

Rechen-schaltung

$M \cdot \omega_s$

Speicher

$t_a$

$t_R$

Ueberwachungseinrichtg.

| $M \cdot \omega_s < a$ | $t_{11}$ | $t_{21}$ |
|---|---|---|
| $M \cdot \omega_s < b$ | $t_{12}$ | $t_{22}$ |
| $M \cdot \dot{\omega}_s < c$ | $t_{13}$ | $t_{23}$ |
|  |  |  |

$t_a > t_{1x}$   $t_a > t_{2x}$

ja   ja

Kupplungs-steuerung

$M_A$   M   $y_2$   $y_1$   $n_A$

y

Getriebesteuerung

Motor

Kupplung

Getriebe

Rad

30
31
32
34
40
36
28
26
18  21
16
38
44
42  6  8  10
20  4
2
24  22
14
12